# DEMANDE DE BREVET EUROPEEN

(11) **EP 1 036 764 A1**
(43) Date de publication de la demande: **20.09.2000**
(21) Numéro de dépôt: 00400580.7
(22) Date de dépôt: 03.03.2000
(51) Int. Cl.: C01B 33/18

(54) **Procédé de fabrication d'une poudre de silice et utilisation d'une telle poudre pour la réalisation d'une préforme de fibre optique**

(30) Priorité: 15.03.1999 FR 9903144
(71) Demandeur: ALCATEL, 75008 Paris (FR)
(72) Inventeur: Jourdier, Pierryle, 75008 Paris (FR); Lavallade, Christelle, 78260 Acheres (FR); Campion, Jean-Florent, 78700 Conflans St. Honorine (FR); Oskeritsian, Philippe, 92500 Rueil Malmaison (FR); Saugrain, Jean-Maxime, 78110 Le Vesinet (FR)
(74) Mandataire: Lamoureux, Bernard

(57) **Abrégé**

Procédé de fabrication d'une poudre de silice par une méthode sol-gel, dans lequel on réalise une suspension dans l'eau d'une matière première à base de silice, de pH éventuellement ajusté entre 3 et 4,5, on gélifie la suspension, on sèche le gel obtenu et on fractionne le gel sec en granulés de silice, caractérisé en ce que la matière première à base de silice comprend des particules comprenant du chlore. De préférence, la matière première à base de silice comprend des particules comprenant du chlore de surface spécifique inférieure à 80 m²/g et aussi des particules de silice de surface spécifique comprise entre 150 et 300 m²/g, en proportion inférieure à 5 % en poids par rapport à la quantité totale desdites particules comprenant du chlore. L'invention concerne aussi l'utilisation d'une telle poudre pour la réalisation d'une préforme de fibre optique.

## Description

La présente invention concerne un procédé de fabrication d'une poudre de silice par une méthode sol-gel, dans lequel on réalise une suspension dans l'eau d'une matière première à base de silice, on gélifie la suspension, on sèche le gel obtenu et on fractionne le gel sec en une poudre constituée de granulés de silice. Elle concerne également l'utilisation d'une telle poudre pour la réalisation d'une préforme de fibre optique.

Un procédé de fabrication de poudre de silice est notamment connu du brevet français FR-B1-2.693.451. La suspension est réalisée, comme exemplifié dans ledit brevet, à partir de particules essentiellement exemptes de chlore. En effet, la fabrication de particules de silice s'effectue par oxydation, généralement en présence d'hydrogène et d'oxygène, de chlorure de silicium SiCl₄. Les particules obtenues directement après une telle fabrication sont qualifiées d"'acides" car elles comprennent du chlore sous forme d'acide chlorhydrique. De telles particules sont corrosives. Généralement ces particules subissent ensuite un traitement de désorption du chlore, de façon à conduire aux particules "neutralisées". Ces particules "neutralisées" sont encore des particules acides, car on estime par exemple leur pH compris entre 3,8 et 4,8 pour une dispersion aqueuse à 4% en poids, pour des particules de surface spécifique égale environ à 50 m²/g. Mais elles sont beaucoup moins acides qu'avant le traitement de désorption du chlore. La fabrication de telles particules de silice présente donc un coût de revient important. Un exemple de particules "neutralisées" est la suie de silice vendue sous le nom Aerosil OX 50 par la société DEGUSSA, constituée principalement de particules de surface spécifique 50 m²/g.

Le procédé selon l'invention a pour but d'éviter partiellement ou totalement l'utilisation de telles particules essentiellement exemptes de chlore.

A cet effet, le procédé selon l'invention est un procédé de fabrication d'une poudre de silice par une méthode sol-gel, dans lequel on réalise une suspension dans l'eau d'une matière première à base de silice, on gélifie la suspension, on sèche le gel obtenu, et on fractionne le gel sec en une poudre constituée de granulés de silice,
**caractérisé en ce que** la matière première à base de silice comprend des particules comprenant du chlore .

De manière surprenante, l'utilisation de particules comprenant du chlore permet également de fabriquer une poudre de silice adaptée à la fabrication des préformes de fibre optique.

Lesdites particules comprenant du chlore ont l'avantage d'être d'un coût très inférieur à celui des particules essentiellement exemptes de chlore, car elles n'ont pas subi de traitement de désorption de chlore.

Selon un mode de réalisation, le procédé selon l'invention comprend un tamisage des granulés de silice obtenus par fractionnement, en une poudre composée de granulés de taille comprise entre une limite inférieure comprise entre 75 et 120 µm et une limite supérieure de taille comprise entre 280 et 550 µm. La taille d'un granulé est définie par la plus grande longueur du granulé, quelle que soit sa forme. Elle est principalement mesurée par le tamisage.

Les particules de silice comprenant du chlore utilisées dans le procédé selon l'invention sont généralement de surface spécifique inférieure ou égale à 80 m²/g. Avantageusement, dans le cas du tamisage, l'utilisation de particules de départ de cette nature conduit à un bon rendement du procédé en granulés. Le rendement en granulés se définit comme la proportion, en % poids, de granulés issus du tamisage par rapport à la proportion de silice contenue dans la matière première mise en suspension.
Selon un mode de réalisation du procédé selon l'invention, la matière première à base de silice comporte des particules de silice comprenant du chlore de surface spécifique inférieure ou égale à 80 m²/g ainsi que des particules de silice de surface spécifique comprise entre 150 et 300 m²/g en proportion inférieure à 5 %, de préférence comprise entre 0,5 et 1,5%, en poids par rapport à la quantité totale desdites particules comprenant du chlore. De façon surprenante un tel mode de réalisation permet d'obtenir une viscosité de la suspension accrue, qui permet avantageusement un meilleur rendement en granulés, généralement de taille comprise entre environ 100 et 500 µm, voire entre environ 100 et 300 µm. En particulier l'opération de tamisage est améliorée car avantageusement il se produit peu de bouchages du tamis, essentiellement grâce à la présence moindre de granulés de taille inférieure à environ 100 µm risquant de s'agglomérer les unes aux autres.

Les particules de silice de surface spécifique comprise entre 150 et 300 m²/g comprennent de préférence du chlore. Mais de telles particules peuvent aussi être essentiellement exemptes de chlore, car elles sont en faible proportion dans la suspension et donc le coût de revient du procédé selon l'invention reste très avantageux.

Selon un autre mode de réalisation du procédé selon l'invention, dans le cas du mode de réalisation où l'on effectue un tamisage tel que décrit précédemment, la matière première à base de silice comporte en outre des granulés de silice de taille supérieure à la limite supérieure du tamisage. Ainsi on procède à au moins deux fabrications de granulés de silice telles que définies précédemment, la dernière fabrication étant telle que la matière première à base de silice comprenne en outre des granulés de silice qui sont rejetés par le tamisage d'au moins l'un des procédés de fabrication précédent. Comme il est décrit dans la demande de brevet FR-A1-2.766.170, il est possible de cette façon d'effectuer un recyclage des granulés de silice hors norme rejetés dans le tamisage, par exemple entre 100 et 500 µm, en les ajoutant à la matière première à base de silice. Dans un tel cas on préfère généralement ajouter la fraction de granulés hors norme de taille supérieure à la limite supérieure du tamisage, qui est par exemple de 500 µm mais qui peut être aussi par exemple de 300 µm pour un tamisage entre environ 100 et 300 µm, à la suspension initiale. De façon surprenante un tel mode de réalisation permet d'obtenir une viscosité de la suspension adéquate, qui permet avantageusement un rendement accru en granulés issus du tamisage, généralement de taille comprise entre environ 100 et 500 µm, voire entre environ 100 et 300 µm.

Selon un mode de réalisation du procédé selon l'invention, le pH de la suspension est ajusté à une valeur comprise entre 3 et 4,5. La corrosion du réacteur dans lequel est réalisée la suspension est ainsi avantageusement limitée.

On fractionne le gel sec en granulés de silice de diamètre généralement compris entre quelques µm et 2 mm, ainsi qu'il est connu de l'homme du métier. Lesdits granulés présentent généralement une densité apparente de l'ordre de 0,5 g/cm³ à 0,6 g/cm³. Le fractionnement industriel se fait généralement par un granulateur utilisant une hélice.

Les particules acides sont généralement mises en solution en proportion comprise entre 30 et 76 %, par exemple égale à 70%, en poids.

L'invention concerne aussi l'utilisation d'une poudre fabriquée selon le procédé décrit précédemment, pour la réalisation d'une préforme de fibre optique. La poudre de granulés obtenus par le procédé selon l'invention peut ainsi être utilisée directement ou après densification dans une torche à plasma d'un procédé de recharge plasma sur une préforme primaire.

Selon un mode de réalisation préféré, la poudre fabriquée selon le procédé décrit précédemment est tamisée avant son utilisation pour la réalisation d'une préforme de fibre optique. Ladite poudre est alors généralement composée, après tamisage, de granulés de taille comprise entre une limite inférieure comprise entre 75 et 120 µm et une limite supérieure de taille comprise entre 280 et 550 µm.

Ainsi qu'il est décrit dans le brevet français FR-B1-2.693.451, il est possible d'effectuer une telle recharge en présence d'un gaz fluorant et il est aussi possible d'ajouter aux granulés de silice ainsi obtenus au moins un dopant.

Ainsi qu'il est décrit dans le brevet français FR-B1-2.693.451, il est possible d'effectuer un traitement thermique de densification desdits granulés de silice, et il est encore possible, en outre, d'éliminer une partie des groupements OH par une phase intermédiaire dudit traitement thermique.

D'autres caractéristiques et avantages de la présente invention apparaîtront au cours de la description suivante d'exemples de mise en oeuvre donnés à titre illustratif mais nullement limitatif.

### Exemples

### Exemple 1 (selon l'invention)

On réalise une suspension de 50 kg de suie de silice comprenant du chlore, de surface spécifique de 50 à 60 m²/g, dans 20 l d'eau désionisée. Le pH est d'environ 2,5 et il est ajusté à 4 par ajout d'une solution basique de NH₃. Un tel ajustement présente l'avantage de limiter voire de supprimer la corrosion du réacteur par la suie.

On chauffe dans un réacteur sous vide par micro-ondes jusqu'à obtention d'un gel puis séchage de ce gel, la température de l'eau présente dans la double enveloppe permettant d'effectuer un tel chauffage étant d'environ 65°C. Ce gel séché par micro-ondes sous vide est ensuite fractionné à l'aide d'une hélice tournant en continu à une vitesse d'environ 40 jusqu'à environ 150 tours par minute. On obtient des granulés de silice de densité de 0,5 à 0,6 g/cm³, de diamètre compris entre quelques µm et 1000 µm, la granulométrie étant centrée autour de 100 µm et 50% en poids des particules étant inférieures à 100 µm.

On tamise la poudre de granulés ainsi obtenue entre environ 100 et 300 µm, puis on densifie une telle poudre tamisée à 1400°C pendant 9 heures sous atmosphère d'hélium, par balayage d'hélium sous pression atmosphérique. On utilise une telle poudre tamisée densifiée dans la torche à plasma d'un procédé de dépôt plasma par projection et fusion d'une poudre de silice sur une préforme primaire. Le débit est compris entre 900 et 4000 g/h, et la projection est effectuée sur une préforme primaire de diamètre 21 mm devant être porté à 63 mm.

### Exemple 2 (selon l'invention)

On disperse 600 g de suie de silice de surface spécifique égale à 200 m²/g, vendue par la société DEGUSSA sous la dénomination Aerosil 200, dans 20 l d'eau désionisée. Une telle suie de silice est pratiquement exempte de chlore. On ajoute ensuite 50 kg de suie "acide" de silice identique à celle de l'exemple 1. On fabrique des granulés de silice selon le même mode opératoire qu'à l'exemple 1. On obtient finalement des granulés de taille comprise entre quelques µm et 1000 µm, centrée autour de 300 µm. Seulement environ 15% des particules sont de taille inférieure à 100 µm.

### Exemple 3 (comparatif)

On réalise une suspension de 50 kg de suie de silice, de surface spécifique de 50 m²/g, vendue par la société DEGUSSA sous la dénomination Aerosil 50, dans 37 l d'eau désionisée. Une telle suie de silice est pratiquement exempte de chlore. On fabrique des granulés de silice selon le même mode opératoire qu'à l'exemple 1. On obtient finalement des granulés de taille comprise entre quelques µm et 1000 µm, centrée autour de 300 µm. Seulement 20 % des particules sont de taille inférieure à 100 µm.

### Exemple 4 (selon l'invention)

Il est possible de recycler une partie des granulés rejetés lors du tamisage, comme explicité dans la demande de brevet français FR-A1-2.766.170. On procède à la fabrication de granulés selon l'exemple 1, puis on tamise lesdits granulés entre environ 100 et 300 µm par l'utilisation combinée de deux tamis superposés, l'un étant calibré à 100 µm et l'autre étant calibré à 300 µm. On obtient environ 20% en poids de granulés de taille comprise entre 100 et 300 µm et 30% en poids de taille supérieure à 300 µm.

Après plusieurs fabrications successives identiques à la fabrication décrite ci-dessus, on peut préparer une suspension avec des granulés issus de recyclage. On prépare ainsi une suspension comprenant 20 kgs de suie "acide" de silice identiques à celles de l'exemple 1, 200 g de suie "neutralisée" de silice de surface spécifique égale à 200 m²/g, vendue par la société DEGUSSA sous la dénomination Aerosil 200, et 40 kgs de granulés dont la taille est supérieure à 300 µm, dans 24 l d'eau désionisée. On fabrique des granulés de silice selon le même mode opératoire qu'à l'exemple 1. Les résultats sont comparables à ceux de l'exemple 2 précédent. On obtient finalement des granulés de taille comprise entre quelques µm et 1000 µm, centrée autour de 300 µm. Seulement environ 15% des particules sont de taille inférieure à 100 µm.

## Revendications

1. Procédé de fabrication d'une poudre de silice par une méthode sol-gel, dans lequel on réalise une suspension dans l'eau d'une matière première à base de silice, on gélifie la suspension, on sèche le gel obtenu et on fractionne le gel sec en poudre constituée de granulés de silice,
**caractérisé en ce que** la matière première à base de silice comprend des particules comprenant du chlore.

2. Procédé selon la revendication 1 comprenant un tamisage des granulés de silice obtenus par fractionnement, en une poudre composée de granulés de taille comprise entre une limite inférieure comprise entre 75 et 120 µm et une limite supérieure de taille comprise entre 280 et 550 µm.

3. Procédé selon la revendication 2 tel que la matière première à base de silice comporte en outre des granulés de silice de taille supérieure à la limite supérieure du tamisage.

4. Procédé selon l'une des revendications 1 à 3 tel que la matière première à base de silice comprend des particules comprenant du chlore de surface spécifique inférieure à 80 m²/g.

5. Procédé selon la revendication 4 tel que ladite matière première comporte en outre des particules de silice de surface spécifique comprise entre 150 et 300 m²/g, en proportion inférieure à 5 % en poids par rapport à la quantité totale desdites particules comprenant du chlore.

6. Procédé selon la revendication 5 tel que la proportion des particules de silice de surface spécifique comprise entre 150 et 300 m²/g est comprise entre 0,5 et 1,5 % en poids par rapport à la quantité desdites particules comprenant du chlore.

7. Procédé selon l'une des revendications 1 à 6 tel que le pH de la suspension est ajusté à une valeur comprise entre 3 et 4,5.

8. Utilisation d'une poudre de silice fabriquée selon le procédé selon l'une des revendications 1 à 7 pour la fabrication d'une préforme de fibre optique.

9. Utilisation selon la revendication 8 dans laquelle la poudre fabriquée selon le procédé décrit précédemment est tamisée avant son utilisation pour la réalisation d'une préforme de fibre optique.

10. Utilisation selon la revendication 9 dans laquelle ladite poudre est composée, après tamisage, de granulés de taille comprise entre une limite inférieure comprise entre 75 et 120 µm et une limite supérieure de taille comprise entre 280 et 550 µm.
